(19) **Europäisches Patentamt**
**European Patent Office**
**Office européen des brevets**

(11) Veröffentlichungsnummer: **0 166 425**
**B1**

(12) **EUROPÄISCHE PATENTSCHRIFT**

(45) Veröffentlichungstag der Patentschrift: **14.03.90**

(51) Int. Cl.⁵: **B 64 C 11/18**

(21) Anmeldenummer: **85107847.7**

(22) Anmeldetag: **25.06.85**

(54) **Schraube für gasförmige oder flüssige Medien, insbesondere Luftschraube.**

(30) Priorität: **29.06.84 DE 3424010**

(43) Veröffentlichungstag der Anmeldung:
**02.01.86 Patentblatt 86/01**

(45) Bekanntmachung des Hinweises auf die
Patenterteilung:
**14.03.90 Patentblatt 90/11**

(84) Benannte Vertragsstaaten:
**FR GB IT**

(56) Entgegenhaltungen:
**WO-A-82/02694**
**BE-A- 401 302**
**FR-A-1 010 026**
**FR-A-2 045 383**

(73) Patentinhaber: **Schubert, Jürgen**
**Forsthaus im Hintertal**
**D-6331 Schöffengrund (DE)**
(73) Patentinhaber: **Zeides, Otto**
**Lehnbachweg 10**
**D-7410 Metzingen (DE)**

(72) Erfinder: **Zeides, Otto**
**Lehnbachweg 10**
**D-7410 Metzingen (DE)**

(74) Vertreter: **Kratzsch, Volkhard, Dipl.-Ing.**
**Mülbergerstrasse 65**
**D-7300 Esslingen (DE)**

EP 0 166 425 B1

Courier Press, Leamington Spa, England.

# EP 0 166 425 B1

**Beschreibung**

Die Erfindung bezieht sich auf eine Schraube für gasförmige oder flüssige Medien, insbesondere Luftschraube, der ansonsten im Oberbegriff des Anspruchs 1 genannten Art.

Es ist eine Schraube dieser Art bekannt (DE—PS 867 498), bei der der Flügel von zwei Flügelblättern gebildet ist, die in einem Abstand hintereinander liegen und von einem beiden gemeinsamen Schaftteil, mit dem sie einheitlich zusammengefaßt sind, ausgehen. Beide Flügelblätter verlaufen hier parallel zueinander, wobei die Längsmittelachse des Flügels etwa auf der Mitte dieses Abstandes liegt. Die Schraube ist als Verstellschraube gestaltet, wobei durch diese beschriebene Ausbildung die wirkenden Zentrifugalmomente stark reduziert oder gar ganz aufgehoben werden sollen. Von Nachteil ist jedoch, daß die einzelnen Flügelblätter, die praktisch vom Drehzentrum ausgehend als dünne Einzelblätter gestaltet sind, hohen Fliehkräften und damit starken Beanspruchungen ausgesetzt sind, insbesondere dann, wenn man mit hohen Umlaufgeschwindigkeiten arbeiten will. Im Bereich der Flügelblätter sind die Axialabmessungen mehr als doppelt so groß als bei einflügeligen Luftschrauben, was ebenfalls je nach Platzverhältnissen von großem Nachteil sein kann.

Auf jeden Fall ist mit einer derartigen Verstellschraube keine Steigerung der Schubwerte und damit keine Leistungssteigerung zu verzeichnen. Auch die Lärmemission einer solchen Schraube liegt über dem Zulässigen.

Aus WO—A—82/02694 ist ein rotierender Flügel bekannt, an dessen Oberseite im Bereich der Flügelvorderkante ein Strömungsverdichter in Form eines schaufelförmigen Blattes angebracht ist, das über seine Länge verwunden ist. Der Strömungsverdichter ist mit einem Fußteil in einer Ausnehmung des Flügels gelagert und dort mittels Schraubverbindungen befestigt. Die Ausnehmung ist so beschaffen, daß eine strömungsgünstige Einlagerung des Fußes des Strömungsverdichters erreicht ist. Der Strömungsverdichter ist zur Vorderkante des Flügels derart winklig vorgepfeilt, daß sich von einem Endabschnitt an zwischen der Vorderkante des Flügels und der Hinterkante des Strömungsverdichters ein etwa V-förmiger Spalt ergibt und die Hinterkante des Strömungsverdichters in Strömungsrichtung vor der Vorderkante des Flügels angeordnet ist. Durch den angebrachten Strömungsverdichter wird am Flügel eine zur Flügelvorderkante vorgezogene Unterdruckzone und Überdruckzone ausgebildet. Die Überdruckzone entsteht an der Unterseite des Strömungsverdichters und bewirkt einen Druckausgleich durch den Spalt mittels abfließender Strömung, wobei die Druckausgleichsströmung eine weitere Gaszuströmung aus der Druckzone unterhalb des Flügels induziert, die dem anströmenden Medium zugemischt wird. Auf der Oberseite des Flügels wird die Strömung durch Druckausgleich so gerichtet, daß die Geschwindigkeit des Mediums im Bereich der Flügelhinterkante über die Flügellänge gleich ist und der Ablösungspunkt der Strömung zur Flügelhinterkante verschoben wird. Dadurch soll der erzielbare Schub vergrößert werden und eine Leistungssteigerung erzielt werden. Strömungsverdichter dieser Art sollen auch zur Leistungssteigerung von Luftschrauben verwendbar sein. Der zwischen dem Strömungsverdichter und dem Flügel gebildete Spalt beginnt, in Radialrichtung gesehen, frühestens erst im zweiten halben Radialbereich, z.B. etwa bei 55 bis 60% des vom Drehzentrum gemessenen Radialabstandes. Daher wird nur eine geringe Verbesserung der Schubleistung erzielt. Nachteilig ist ferner eine relativ große Geräuschentwicklung. Der Strömungsverdichter ist ebenso lang wie der Flügel. Er bildet auf seiner gesamten Länge, die größer als diejenige des Spaltes ist, ein eigenständig schwingendes Element, das nur unzulänglich durch die Befestigung am Flügel hinsichtlich seiner Schwingungen gedämpft ist. An beiden Blattspitzenenden sind beachtliche Randverluste zu verzeichnen, wodurch ebenfalls die Geräuschentwicklung recht groß ist.

Ferner ist eine Schraube bekannt (FR—A—10 10 026), die aus zwei separaten Einzelflügeln zusammengesetzt ist, welche in Abstand hintereinander angeordnet und im Bereich ihrer jeweiligen Nabe mittels Spannbolzen zu einer Schraube zusammengespannt sind. Zwischen den Einzelflügeln ist ein Spalt gebildet, der von den aneinander liegenden Naben durchgehend bis zu den Blattspitzen reicht. Diese Schraube hat die gleichen Nachteile, wie eingangs zu DE—PS 867 498 dargelegt worden ist. Zudem müssen im Bereich der zusammengespannten Naben noch bei Betrieb wirksame Axialkräfte aufgenommen werden. Beim Zusammensetzen muß ferner auf richtige Relativstellung beider Einzelflügel zueinander geachtet wreden. Die Schraube hat relativ große Abmessungen in axialer Richtung und ist außerdem relativ schwer. Dies ist z.B. für Flugzeuge und insbesondere für Ultraleichtflugzeuge von zusätzlichem Nachteil.

Der Erfindung liegt die Aufgabe zugrunde, eine Schraube der im Oberbegriff des Anspruchs 1 genannten Art zu schaffen, dieleicht und kostengünstig ist, axial wie radial praktisch nicht größere Abmessungen als einflügelige, herkömmliche Schrauben hat und die insbesondere deutlich höhere Schubwerte und zugleich eine wesentliche Reduzierung der Lärmemission ermöglicht.

Die Aufgabe ist bei einer Schraube der im Oberbegriff des Anspruchs 1 genannten Art gemäß der Erfindung durch die Merkmale im Kennzeichnungsteil des Anspruchs 1 gelöst.

Der Erfindung liegt die ebenfalls eigenständig erfinderische Überlegung zugrunde, daß die von einer Schraube erzeugten Schubkräfte erst etwa ab der zweiten Radialhälfte der Schraube beachtliche Werte annehmen und Maßnahmen, die Schubwerte zu erhöhen, deswegen im Bereich der ersten Radialhälfte nur Kosten, vermehrten Aufwand und Gewicht bringen, jedoch keine merkliche Verbesserung der Schubwerte. Aus diesem Grunde ist die erfindungsgemäße Schraube etwa in diesem ersten halben Radialbereich

2

unverändert einer herkömmlichen Schraube gestaltet, wodurch die Schraube in herkömmlicher Weise als Verstellschraube oder solche mit fester Einstellung, also insoweit unverändert, ausgebildet werden kann. Zugleich ergeben sich dadurch unverändert kleine axiale Abmessungen. Die Schraubennabe hat die gleichen Axialmaße wie bei einflügeligen herkömmlichen Schrauben.

Die erfindungsgemäße Gestaltung kommt im übrigen der Festigkeit zugute, da die dadurch wesentlich kürzer bemessenen einzelnen Flügelblätter nicht so starken Fliehkräften und Schwingungsbeanspruchungen ausgesetzt sind, wie doppelt so lange Einzelblätter. Durch die zumindest zwei einzelnen Flügelblätter etwa auf der zweiten Hälfte des Radialbereiches wird eine erhebliche Steigerung der Schubwerte und dadurch ein höherer Leistungskoeffizient erreicht. Bei Einsatz der Schraube als Luftschraube für Luftfahrzeuge ergeben sich deutlich bessere Flugeigenschaften. Außerdem ergeben sich an den Blattspitzen der Flügelblätter kleinere Randverluste mit erheblich reduzierter Geräuschentwicklung. So ist eine Geräuschreduzierung um bis zum 100% erreichbar. Bei allem ist die erfindungsgemäße Schraube leicht, kostengünstig und außerdem sowohl in Axialrichtung als auch in Radialrichtung klein und handlich mit nur kleinen Abmessungen, die eine vielfältige Einsatzmöglichkeit erschließen.

Es versteht sich, daß die erfindungsgemäße Schraube auch für Windmühlen, Ventilatoren od. dgl. Schraubenräder in freier Strömung zum Einsatz kommen kann, ferner auch für in Flüssigkeiten arbeitende Schrauben.

Eine vorteilhafte Ausführungsform ergibt sich aus Anspruch 2 und ferner aus Anspruch 3. Durch die beiden Flügelblätter ist eine zweistufige Beschleunigung erreichbar, und zwar die Beschleunigung in erster Stufe durch das in Umlaufrichtung vorn befindliche Flügelblatt und sodann in zweiter Stufe durch das zweite Flügelblatt. Durch den zwischen beiden vorhandenen Spalt und den sich ergebenden Spalteffekt sind auf der Saugseite an der Profilhinterkante des ersten Flügelblattes entstehende Wirbel mit Strömungsablösung verhindert. Durch den Spalt und das zweite Flügelblatt wird vielmehr eine laminare Luftströmung erzwungen. Dies wirkt sich leistungssteigernd und außerdem geräuschmindernd aus. Ferner sind die Voraussetzungen dafür geschaffen, größere Anstellwinkel zu wählen, ohne Gefahr einer Strömungsablösung auf der Saugseite. Dies ermöglicht höhere Drehzahlen. Aufgrund nur kleiner Randverluste an den Blattspitzen ergibt sich eine weitere Lärmreduzierung.

Weitere vorteilhafte Ausführungsformen enthalten die Ansprüche 4—8.

Weitere Einzelheiten und Vorteile ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen durch Nennung der Anspruchsnummer darauf Bezug genommen, wodurch jedoch alle diese Anspruchsmerkmale als erfindungswesentlich offenbart zu gelten haben.

Die Erfindung ist nachfolgend anhand eines in der Zeichnung gezeigten Ausführungsbeispieles näher erläutert. Es zeigen:

Fig. 1 eine schematische perspektivische Ansicht eines Flügelteiles einer Luftschraube,

Fig. 2 eine Vorderansicht des Flügelteiles in Fig. 1, in vergrößertem Maßstab,

Fig. 3 eine Ansicht des Flügelteiles in Pfeilrichtung III in Fig. 2,

Fig. 4 und 5 jeweils einen Schnitt entlang der Linie IV—IV bzw. V—V in Fig. 2.

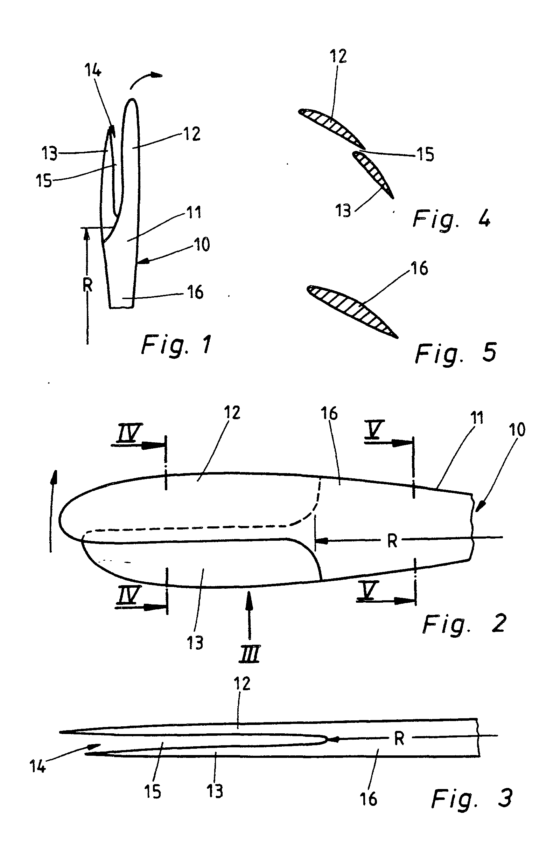

In Fig. 1—5 ist schematisch ein Teil einer Luftschraube 10 gezeigt, die mindestens einen Flügel 11 hat. Meist hat eine solche Luftschraube 10 die Form eines Doppelflügels, der aus zwei Flügeln 11 besteht, die zusammen mit der nicht sichtbaren Flügelnabe miteinander einstückig sind und in Richtung einer Diametralen verlaufen. Zwingend ist dies für die Erfindung nicht; denn die Schraube, insbesondere Luftschraube 10, kann auch allein einen Flügel 11 mit nicht weiter gezeigter Nabe aufweisen oder auch statt dessen drei- oder mehrflüglig gestaltet sein.

Der Flügel 11 weist zumindest zwei in radialem Abstand vom Drehzentrum sich erstreckende, einzelne Flügelblätter 12 und 13 auf. Diese verlaufen unter Belassung eines Zwischenraumes 14 dazwischen mit Abstand voneinander.

Der Flügel 11 ist zur Bildung dieser einzelnen Flügelblätter 12 und 13 unter Bildung eines Spaltes 15 als Zwischenraum geschlitzt. Diese Schlitzung mit Bildung des Spaltes 15 beginnt jedoch erst ab etwa 40% bis 50% des ab nicht weiter gezeigtem Drehzentrum gemessenen Radialabstandes des Flügels 11, also etwa bei R. Der ungeschlitzte restliche Flügelschaft 16 hat bis hin zur nicht sichtbaren Nabe die herkömmliche Form, wie sie von Luftschrauben in Form z.B. eines Doppelflügels bekannt ist. Durch die etwa bei 40% bis 50% des Gesamtradius einsetzende Gabelung ergibt sich für diesen restlichen, gegabelten Teil des Flügels 11 ein Spaltflügel, wobei die Radialerstreckung dieses Spaltes 15 und so geschaffenen Spaltflügels etwa über 50% bis 60% des restlichen Radius des Flügels 11 verläuft.

Zeichnet man beim Flügel 11 im Schaftbereich 16, z.B. dort, wo die Schnittlinie V—V in Fig. 2 verläuft, die Profilsehne des nicht geteilten Flügelprofiles ein, so verläuft der Spalt 15, im Querschnitt betrachtet, zumindest annähernd entweder parallel oder in spitzem Winkel zu dieser Profilsehne. Die einzelnen Flügelblätter 12 und 13 sind entlang der Profilsehne des nichtgeteilten Flügelprofiles hintereinander angeordnet. Dies zeigt deutlich Fig. 4. Dabei überlappen sich die beiden Flügelblätter 12 und 13, im Querschnitt betrachtet, zumindest geringfügig, wobei die Nase des in Fig. 4 rechts befindlichen zweiten Flügelblattes 13 von der Hinterkante des ersten Flügelblattes 12 ein wenig überlappt ist.

Der gesamte Flügel 11 bildet ein einstückiges Teil. Die beiden Flügelblätter 12 und 13 ab Ende des Radialbereiches R sind z.B. durch Herausarbeiten des Spaltes 15 aus dem Material des Flügels 11 gebildet. Dies macht deutlich, daß es sich im Grunde um einen solchen Flügel 11 handelt, der auf dem Radialbereich R wie ein normaler Flügel beschaffen ist und radial anschließend daran durch Herausarbeiten des Spaltes 15 und durch Schaffung der beiden einzelnen Flügelblätter 12 und 13 die Gestalt etwa eines Doppelflügels erhält.

Aus Fig. 4 ist ersichtlich, daß das zweite Flügelblatt 13 bezogen auf das erste Flügelblatt 12 einen demgegenüber größeren positiven Anstellwinkel als das erste Flügelblatt 12 hat. Der Anstellwinkel des zweiten Flügelblattes 13 ist hierbei zweckmäßigerweise um Werte zwischen 1° und 5°, insbesondere um 2° bis 3°, in Positivrichtung größer bemessen als der Anstellwinkel des ersten Flügelblattes 12.

Ferner ist eines der Flügelblätter kürzer als das andere bemessen, hier das zweite Flügelblatt 13 radial kürzer als das erste Flügelblatt 12. Betrachtet man die Umlaufrichtung des Flügels 11 gemäß Pfeil 17, so kann das kürzere Flügelblatt 13 sowohl in Umlaufrichtung vorn oder statt dessen hinten liegen.

Der Radius des kürzeren Flügelblattes 13 ist um Werte zwischen 3% bis 10% insbesondere um 4% bis 5% des zweifachen Halbmessers (zweimal R) kürzer bemessen als der Radius des anderen, längeren Flügelblattes 12.

Bei einem anderen, nicht gezeigten Ausführungsbeispiel können die Flügelblätter 12, 13 an ihren Blattspitzen untereinander abgestützt und verbunden sein.

Es versteht sich, daß der Flügelschaft 16 in dem Bereich, der nicht weiter dargestellt ist, herkömmlicher Art sein kann, also entweder als um die Längsachse drehverstellbarer Schaft oder statt dessen als fest einstellbarer Schaft.

Durch die erfindungsgemäße Gestaltung der Luftschraube 10 werden im einzelnen folgende wesentliche und überraschende Vorteile erreicht. Die beiden Flügelblätter 12 und 13 bewirken eine zweistufige Beschleunigung. Die erste Beschleunigungsstufe wird durch das in Umlaufrichtung gemäß Pfeil 17 vorn liegende Flügelblatt 12 bewirkt, die zweite Beschleunigungsstufe durch das nächstfolgende Flügelblatt 13. Durch die beiden Flügelblätter 12 und 13 und den Spalt 15 dazwischen ist ein Spalteffekt erreicht. Anders, als sonst im Bereich der Profilhinterkante, und dort auf der Saugseite, können sich beim ersten Flügelblatt 12 auf dessen Saugseite an der Profilhinterkante keine Wirbel mit einhergehender Strahlablösung bilden. Vielmehr wird infolge des Spaltes 15 und des folgenden zweiten Flügelblattes 13 diese Wirbelbildung verhindert und eine laminare möglichst verlustfreie Strömung erzwungen. Da die Gefahr gebannt oder zumindest wesentlich gemindert ist, daß die Strömung auf der Saugseite abreißt, sind größere Anstellwinkel für die Flügelblätter 12, 13 möglich und damit höhere Geschwindigkeiten. Die Erfindung macht sich die Erkenntnis zunutze, daß die Schubkraftverteilung über den Radialbereich der Luftschraube 10 erst ab etwa 40% bis 45% des Radius einigermaßen beachtliche Schubkraftwerte aufzeigt, die dann auch tatsächlich für den Vortrieb nutzbar sind. Aufgrund der Teilung des Flügels 11 ab diesem Radialbereich R durch den Spalt 15 in die zwei Flügelblätter 12 und 13 ist in diesem Radialbereich eine erhebliche Steigerung der erzeugten Schubkräfte zu verzeichnen. Es wird ein beachtlich höherer Leistungskoeffizient erreicht. Dies alles führt zu erheblich besseren Flugeigenschaften eines damit angetriebenen Flugzeuges. Ein weiterer wesentlicher Vorteil liegt darin, daß an den Blattspitzen der Flügelblätter 12 und 13 nur sehr kleine Randverluste entstehen und daher die Geräuschentwicklung außerordentlich reduziert ist. Es hat sich gezeigt, daß Lärmverringerungen in der Größenordnung bis zu 100%, was ungefähr eine Abstufung von 5,5 dB entspricht, erreichbar sind. Dies ist auf die unterschiedliche Länge der Flügelblätter 12 und 13 zurückzuführen, da hierdurch der induzierte Widerstand in diesem Bereich kleiner ist. Vorteilhaft ist außerdem, daß trotz der überaus großen möglichen Leistungsausbeute mit einer solchen Luftschraube 10 die Kosten dafür nicht wesentlich über diejenigen einer herkömmlichen normalen Luftschraube hinausgehen. Auf jeden Fall sind die Kosten für eine derartige erfindungsgemäße Luftschraube 10 wesentlich niedriger als für herkömmliche Doppelluftschrauben. Ebenso ist das Gewicht der Luftschraube 10 außerordentlich niedrig. Die axiale Baulänge der Luftschraube 10 ist nicht größer als diejenige einer bekannten herkömmlichen Luftschraube, und zwar sowohl im Bereich der Nabe als auch entlang des Flügels gesehen im radial weiter außen liegenden Bereich. Es hat sich ergeben, daß selbst bei niedrigen Antriebsgeschwindigkeiten der Luftschraube 10 im Vergleich zu herkömmlichen Luftschrauben wesentlich höhere Leistungen bei extrem geringerer Geräuschentwicklungen erreichbar sind. Dies ist insbesondere für den Einsatz der Luftschraube 10 für Ultraleicht-Flugzeuge von Vorteil, weil es hierbei erstmals möglich ist, bezüglich der Lärmemission die geforderte Grenze von max. 60 dB mit Sicherheit zu unterschreiten.

**Patentansprüche**

1. Schraube für gasförmige oder flüssige Medien, insbesondere Luftschraube (10), mit mindestens einem Flügel (11), der zumindest zwei in radialem Abstand vom Drehzentrum sich erstreckende einzelne Flügelblätter (12, 13) aufweist, die unter Belassung eines Zwischenraumes (14) dazwischen mit Abstand voneinander verlaufen, dadurch gekennzeichnet, daß der Flügel (11) zur Bildung der einzelnen Flügelblätter (12, 13) erst ab 40% bis 50% seines ab Drehzentrum gemessenen Radialabstandes (R) beginnend bis zur Flügelspitze durchgehend unter Bildung eines Spaltes (15) geschlitzt ist, daß das zweite Flügelblatt (13), welches im Anschluß an den Spalt (15) auf das erste Flügelblatt (12), im Querschnitt betrachtet, folgt, einen größeren positiven Anstellwinkel als das erste Flügelblatt (12) hat und daß das zweite, in Drehrichtung hintere Flügelblatt (13) kürzer als das erste Flügelblatt (12) bemessen ist.

2. Schraube nach Anspruch 1, dadurch gekennzeichnet, daß der restliche Teil des Flügels, gemessen über 50% bis 60% seines restlichen Radialverlaufes, als Spaltflügel ausgebildet ist.

3. Schraube nach Anspruch 1 oder 2, dadurch gekennzeichnet, daß der Spalt (15), im Querschnitt betrachtet, zumindest annähernd parallel oder in spitzem Winkel zur Profilsehne des nichtgeteilten Flügelprofiles verläuft.

4. Schraube nach einem der Ansprüche 1—3, dadurch gekennzeichnet, daß die einzelnen Flügelblätter (12, 13), im Querschnitt betrachtet, entlang der Profilsehne des nichtgeteilten Flügelprofiles hintereinander angeordnet sind.

5. Schraube nach Anspruch 4, dadurch gekennzeichnet, daß die einzelnen Flügelblätter (12, 13), im Querschnitt betrachtet, einander zumindest geringfügig überlappen.

6. Schraube nach Anspruch 1, dadurch gekennzeichnet, daß der Anstellwinkel des zweiten Flügelblattes (13) um Werte zwischen 1° bis 5°, insbesondere um 2° bis 3°, größer als der Anstellwinkel des ersten Flügelblattes (12) ist.

7. Schraube nach einem der Ansprüche 1—6, dadurch gekennzeichnet, daß der Radius des kürzeren Flügelblattes (13) um Werte zwischen 3% bis 10%, insbesondere um 4% bis 5%, des zweifachen Halbmessers kürzer bemessen ist als der Radius des anderen Flügelblattes (12).

8. Schraube nach einem der Ansprüche 1—7, dadurch gekennzeichnet, daß die Flügelblätter (12, 13) an ihren Blattspitzen untereinander abgestützt und verbunden sind.

**Revendications**

1. Hélice pour milieux gazeux ou liquides, en particulier hélice aérienne (10), comprenant au moins une pale (11) qui comporte au moins deux lames séparées (12, 13) s'étendant à distance radiale du centre de rotation et qui s'étendent à distance l'une de l'autre en laissant entre elles un intervalle (14), caractérisée en ce que la pale (11), pour former les lames séparées (12, 13), est fendue de façon continue, en formant un interstice (15), à partir de 40% à 50% seulement de sa distance radiale (R) mesurée à partir du centre de rotation et jusqu'à l'extrémité de la pale, qu ela seconde lame (13), qui, considérée en section transversale, vient après la première lame (12) et à la suite de l'interstice (15), a un angle d'attaque positif plus grand que la première lame (12) et que la seconde lame (13), située en arrière dans le sens de rotation, est plus courte que la première lame (12).

2. Hélice selon la revendication 1, caractérisée en ce que la partie restante de la pale, représentant 50% à 60% de son étendue radiale restante, est sous forme de pale fendue.

3. Hélice selon l'une des revendications 1 et 2, caractérisée en ce que la fente (15), considérée en section transversale, s'étend au moins approximativement parallèlement ou à angle aigu par rapport à la corde du profil non divisé de la pale.

4. Hélice selon l'une des revendications 1 à 3, caractérisée en ce que les lames séparées (12, 13), considérées en section transversale, sont disposées l'une derrière l'autre le long de la corde du profil non divisé de la pale.

5. Hélice selon la revendication 4, caractérisée en ce que les lames séparées (12, 13), considérées en section transversale, se recouvrent mutuellement au moins légèrement.

6. Hélice selon la revendication 1, caractérisée en ce que l'angle d'attaque de la seconde lame (13) est supérieur à l'angle d'attaque de la première lame (12) d'une valeur comprise entre 1° et 5°, en particulier de 2° à 3°.

7. Hélice selon l'une des revendications 1 à 6, caractérisée en ce que le rayon de la lame la plus courte (13) est plus court que le rayon de l'autre lame (12) d'une valeur comprise entre 3% et 10%, en particulier de 4% à 5%, du double du rayon.

8. Hélice selon l'une des revendications 1 à 7, caractérisée en ce que les lames (12, 13) sont mutuellement supportées et liées à leurs extrémités libres.

**Claims**

1. Propeller for gaseous or liquid media, especially air propeller (10), having at least one wing (11), which comprises at least two individual wing blades (12, 13) extending at a radial distance from the centre of rotation, which extend at a distance from each other leaving a space (14) between them, characterized in that the wing (11), for forming the individual wing blades (12, 13), is slit starting from at least 40% to 50% of its radial distance (R) as measured from the centre of rotation continuously to the tip of the wing and forming a gap (15), that the second wing blade (13), which adjoining the gap (15) follows the first wing blade (12) as viewed in cross-section, has a larger positive angle of incidence than the first wing blade (12) and that the second wing blade (13), which is behind in the rotational direction, is of shorter length than the first wing blade (12).

2. Propeller according to Claim 1, characterized in that the remaining part of the wing, measured over 50% to 60% of its remaining radial distance, is constructed as a split wing.

3. Propeller according to Claim 1 or 2, characterized in that the gap (15), as viewed in cross-section, extends at least approximately parallel or at an acute angle to the profile chord of the undivided wing profile.

4. Propeller according to one of Claims 1 to 3, characterized in that the individual wing blades (12, 13), as viewed in cross-section, are disposed behind one another along the profile chord of the undivided wing profile.

5. Propeller according to Claim 4, characterized in that the individual wing blades (12, 13), as viewed in cross-section, overlap each other at least slightly.

6. Propeller according to Claim 1, characterized in that the angle of incidence of the second wing blade (13) exceeds the angle of incidence of the first wing blade (12) by values between 1° and 5°, especially by 2° to 3°.

7. Propeller according to one of Claims 1 to 6, characterized in that the radius of the shorter wing blade (13) is shorter than the radius of the other wing blade (12) by values between 3% and 10%, especially by 4% to 5% of twice the radial distance.

8. Propeller according to one of Claims 1 to 7, characterized in that the wing blades (12, 13) are supported against each other and connected together at their blade tips.

Fig. 1

Fig. 4

Fig. 5

Fig. 2

Fig. 3